# EUROPEAN PATENT APPLICATION

(11) **EP 1 686 253 A2**
(43) Date of publication of application: **02.08.2006**
(21) Application number: 06001147.5
(22) Date of filing: 19.01.2006
(51) Int. Cl.: F02D 41/00, F02D 13/02, F01L 31/00

(54) **Intake air amount control apparatus and intake air amount control method for internal combustion engine**

(30) Priority: 01.02.2005 JP 2005025052
(71) Applicant: Toyota Jidosha Kabushiki Kaisha, Toyota-shi, Aichi-ken, 471-8571 (JP)
(72) Inventor: Fuwa, Naohide, Toyota-shi, Aichi-ken 471-8571 (JP)
(74) Representative: Kuhnen & Wacker

(57) **Abstract**

A plurality of changing mechanisms change the manner in which intake air is supplied to an internal combustion engine. A control unit executes a cooperative control in which, based on the driving state of one of a variable vale lift mechanism and at least one of the other changing mechanisms other than the variable valve lift mechanism, the driving state of the other one of the variable valve lift mechanism and the at least one of the changing mechanisms is controlled. A determining unit determines whether the operational response of the changing mechanisms is decreased. A restricting unit restricts the cooperative control when the determining unit determines that the operational response of at least one of the changing mechanisms is decreased. Therefore, disadvantages caused by reduction in the operational response of the changing mechanisms are reduced.

## Description

### BACKGROUND OF THE INVENTION

The present invention relates to an intake air amount control apparatus for an internal combustion engine that is equipped with changing mechanisms that change the manner in which intake air is supplied to the internal combustion engine. The present invention also pertains to an intake air amount control method for the internal combustion engine.

In the internal combustion engine, the intake air amount is generally regulated by selectively opening and closing a throttle valve and is controlled in accordance with the operating state of the engine. Also known is an intake air amount control apparatus that changes the valve timing of intake valves (also the valve timing of exhaust valves in some cases) in addition to the throttle valve (for example, Japanese Laid-Open Patent Publication No. 2003-314308). An internal combustion engine has also been proposed that is equipped with a variable valve lift mechanism that changes the maximum lift of the intake valves in accordance with the operating state of the engine (for example, Japanese Laid-Open Patent Publication No. 2001-263015). As described above, the opening degree of the throttle valve is kept as large as possible by changing the maximum lift of the intake valves so that a pumping loss caused when decreasing the opening degree of the throttle valve is suppressed as much as possible.

In the intake air amount control apparatus equipped with the variable valve lift mechanism, a cooperative control is performed. In the cooperative control, the variable valve lift mechanism is controlled in accordance with the driving state of other changing mechanisms such as a variable valve timing mechanism that changes the valve timing and a throttle valve. Alternatively, other changing mechanisms are controlled in accordance with the driving state of the variable valve lift mechanism. Performing the cooperative control enables to integrally control the changing mechanisms, which permits the intake air amount to be further precisely controlled.

However, with the intake air amount control apparatus that executes such a cooperative control, the following disadvantages may occur. That is, when the operational response of a changing mechanism other than the variable valve lift mechanism is reduced for some reason, the variable valve lift mechanism may be driven assuming that the operational response has not been reduced, or the variable valve lift mechanism may be driven in accordance with the reduction of the operational response, which may cause the maximum lift of the intake valves to be undesirably set to too small a value or too large a value. Moreover, when the operational response of the variable valve lift mechanism is reduced, a control target value (for example, the throttle opening degree and the valve timing) of other changing mechanism may be set to too small a value or too large a value in the same manner. In particular, when the maximum lift of the intake valves is set to too small a value, the engine output is significantly decreased and a stall occurs, thus hindering stable operation of the engine.

### SUMMARY OF THE INVENTION

Accordingly, it is an objective of the present invention to provide an intake air amount control apparatus of an internal combustion engine that is equipped with changing mechanisms that change the manner in which intake air is supplied to the internal combustion engine, and to reduce disadvantages caused by reduction in the operational response of the changing mechanisms such as decrease in the engine output and occurrence of a stall. A further aspect of the present invention is to provide an intake air amount control method for the internal combustion engine.

To achieve the above-mentioned objective, the present invention provides an intake air amount control apparatus for an internal combustion engine equipped with an intake valve. The apparatus includes a plurality of changing mechanisms that change the manner in which intake air is supplied to the internal combustion engine. The changing mechanisms include a variable valve lift mechanism, which changes the maximum lift of the intake valve. A control unit executes a cooperative control in which, based on the driving state of one of the variable vale lift mechanism and at least one of the other changing mechanisms other than the variable valve lift mechanism, the driving state of the other one of the variable valve lift mechanism and the at least one of the changing mechanisms is controlled. A determining unit determines whether the operational response of the changing mechanisms is decreased. A restricting unit restricts the cooperative control when the determining unit determines that the operational response of at least one of the changing mechanisms is decreased.

Further, the present invention provides an intake air amount control method for an internal combustion engine equipped with an intake valve. The method includes changing the manner in which intake air is supplied to the internal combustion engine using a plurality of changing mechanisms. The changing mechanisms include a variable valve lift mechanism, which changes the maximum lift of the intake valve. A cooperative control is executed. In which control, based on the driving state of one of the variable vale lift mechanism and at least one of the other changing mechanisms other than the variable valve lift mechanism, the driving state of the other one of the variable valve lift mechanism and the at least one of the changing mechanisms is controlled. The method further includes: determining whether the operational response of the changing mechanisms is decreased; and restricting the cooperative control when it is determined that the operational response of at least one of the changing mechanisms is decreased.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram illustrating a control system of an internal combustion engine according to one embodiment of the present invention;
Fig. 2A is a diagram illustrating valve actuation of changed by an intake variable valve timing mechanism according to the preferred embodiment;
Fig. 2B is a diagram illustrating valve actuation changed by an exhaust variable valve timing mechanism according to the preferred embodiment;
Fig. 2C is a diagram illustrating valve actuation changed by an intake variable valve lift mechanism according to the preferred embodiment; and
Fig. 3 is a flowchart of a control for suppressing the maximum lift of the intake valve from being set to too small a value.

### DETAILED DESCRIPTION OF THE PREFERRED EMBODIMENTS

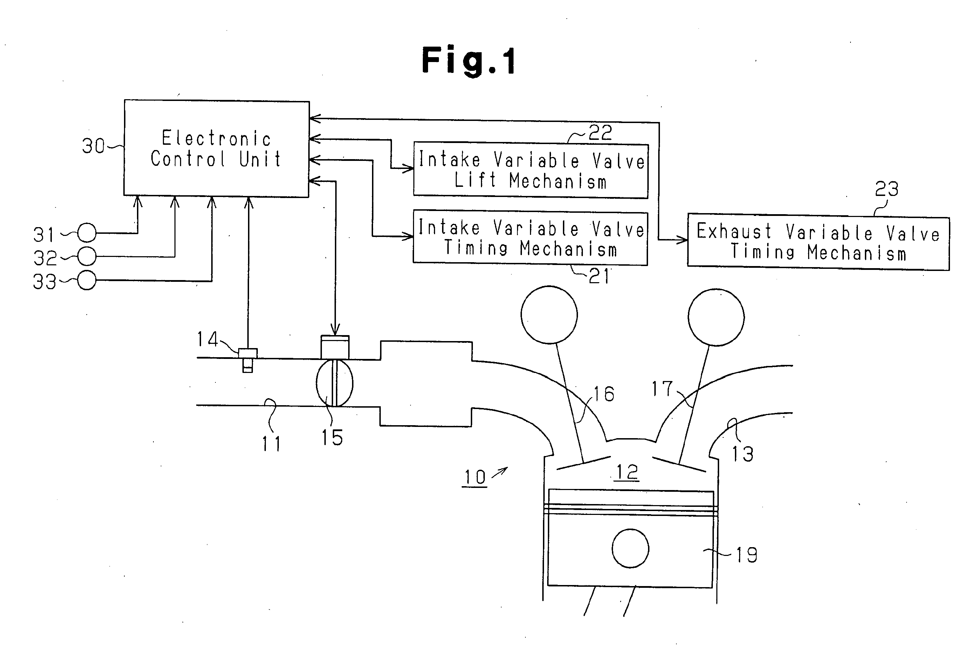

One embodiment of the present invention will now be described with reference to Figs. 1 to 3.

Fig. 1 shows a schematic configuration of a vehicle internal combustion engine 10 according to the preferred embodiment. As shown in Fig. 1, the internal combustion engine 10 is generally configured by an intake passage 11, combustion chambers 12 (only one is shown), and an exhaust passage 13.

Specifically, the engine 10 also has cylinders, in each of which one of the combustion chambers 12 is defined. The engine 10 also has fuel injection valves, ignition plugs, intake valves 16, and exhaust valves 17, each corresponding to one of the combustion chambers 12. In the following, only one set of a combustion chamber 12, an injection valve, an ignition plug, an intake valve 16, and an exhaust valve 17 will mainly be discussed as representing all the combustion chambers 12, the injection valves, the ignition plugs, the intake valves 16, and the exhaust valves 17.

The intake passage 11 of the internal combustion engine 10 is provided with an air flow meter 14, which detects the air flow rate inside the intake passage 11, and a throttle opening degree changing mechanism (throttle valve mechanism) 15, which changes the flow passage area inside the intake passage 11 to change the amount of the intake air supplied therethrough. The intake passage 11 is connected to the combustion chamber 12 via the intake valve 16. The combustion chamber 12 is connected to the exhaust passage 13 via the exhaust valve 17. The intake valve 16 and the exhaust valve 17 are driven in accordance with the rotation of the internal combustion engine 10, and selectively open and close the intake passage 11 and the exhaust passage 13 with respect to the combustion chamber 12.

Air is drawn into the combustion chamber 12 through the intake passage 11. The air and fuel injected from the fuel injection valve, which is not shown, form an air-fuel mixture. When the air-fuel mixture is ignited by the ignition plug, which is also not shown, the air-fuel mixture is burned. This causes a piston 19 to reciprocate, thereby rotating an engine output shaft, which is a crankshaft. The burned air-fuel mixture is then sent from the combustion chamber 12 to the exhaust passage 13 as an exhaust gas.

A valve operating system of the intake valve 16 of the internal combustion engine 10 is provided with an intake variable valve timing mechanism 21 and an intake variable valve lift mechanism 22 for the intake valve 16. A valve operating system of the exhaust valve 17 is also provided with an exhaust variable valve timing mechanism 23 for the exhaust valve 17.

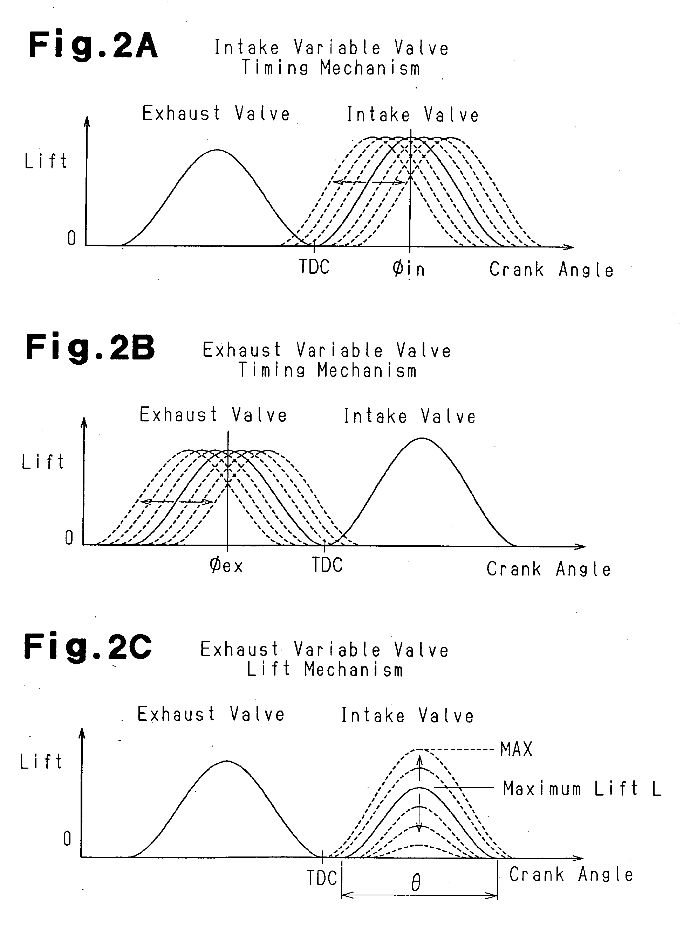

The intake variable valve timing mechanism 21 of the intake valve 16 is configured to continuously change the center of the operation angle of the intake valve 16 (that is, the center of the angle of action of a cam that drives the intake valve 16) ϕin as shown in Fig. 2A. The internal combustion engine 10 employs, as the intake variable valve timing mechanism 21, a mechanism that changes the relative rotational phase of the intake camshaft with respect to the crankshaft to change the center of the operation angle ϕin.

The intake variable valve timing mechanism 21 is driven by the pressure of hydraulic oil supplied from a hydraulic pump of the internal combustion engine 10. The hydraulic pump is driven by the crankshaft.

The exhaust variable valve timing mechanism 23 of the exhaust valve 17 is configured to continuously change the center of the operation angle of the exhaust valve 17 (that is, the center of the angle of action of a cam that drives the exhaust valve 17) ϕex as shown in Fig. 2B. The internal combustion engine 10 employs, as the exhaust variable valve timing mechanism 23, a mechanism for changing the relative rotational phase of the exhaust camshaft with respect to the crankshaft to change the center of the operation angle ϕex.

The intake variable valve lift mechanism 22 is driven by the pressure of the hydraulic oil supplied from the hydraulic pump of the internal combustion engine 10 driven by the crankshaft in the same manner as described above.

Meanwhile, the intake variable valve lift mechanism 22 is configured to continuously change the maximum lift L and the operation angle θ of the intake valve 16 as shown in Fig. 2C. As shown in Fig. 2C, the intake variable valve lift mechanism 22 selectively increases and decreases the maximum lift L of the intake valve 16 in accordance with the increase and decrease of the operation angle θ. For example, when the maximum lift L is at the maximum value (MAX) within the changeable range, the operation angle θ is also at the maximum value within the changeable range, whereas when the maximum lift L is at the minimum value (substantially "0" in this embodiment), the operation angle θ is also at the minimum value (substantially "0" in this embodiment).

The intake variable valve lift mechanism 22 is driven by an electric motor exclusively provided for the mechanism 22. The electric motor is driven by power supplied from a vehicle-mounted battery.

Various types of controls such as a fuel injection control and an ignition timing control of the internal combustion engine 10 configured as described above are performed by an electronic control unit 30. The electronic control unit 30 includes a central processing unit (CPU), which executes various types of computation processes related to control of the internal combustion engine 10, a read only memory (ROM), which stores programs and data for the control, a random access memory, which stores the computation results of the CPU and data input from sensors, and input/output ports, which communicate signals with external devices.

The input port of the electronic control unit 30 is connected to, in addition to the air flow meter 14, a throttle sensor of the throttle opening degree changing mechanism 15, valve timing sensors of the variable valve timing mechanisms 21, 23, and a maximum lift sensor of the intake variable valve lift mechanism 22. The throttle sensor detects the throttle opening degree of the throttle opening degree changing mechanism 15. The valve timing sensor of the intake variable valve timing mechanism 21 detects the center of the operation angle ϕin of the intake valve 16, and the valve timing sensor of the exhaust variable valve timing mechanism 23 detects the center of the operation angle ϕex of the exhaust valve 17. The maximum lift sensor detects.the maximum lift L of the intake valve 16.

Furthermore, the input port is connected to a gas pedal position sensor 31, a crank angle sensor 32, and a coolant temperature sensor 33. The gas pedal position sensor 31 detects the depression amount of a gas pedal, and the crank angle sensor 32 detects the rotation speed of the crankshaft, or the engine rotation speed. The coolant temperature sensor 33 detects the coolant temperature of the internal combustion engine 10 (engine coolant temperature). In addition, the input port is connected to various types of sensors for detecting the operating condition of the internal combustion engine 10 and the running condition of the vehicle.

The output port of the electronic control unit 30 is connected to various types of actuators used for controlling the internal combustion engine 10 such as the throttle opening degree changing mechanism 15, the variable valve timing mechanisms 21, 23, and the intake variable valve lift mechanism 22. The electronic control unit 30 performs various types of controls of the internal combustion engine 10 by controlling the actuators based on the detection results from the various types of sensors.

In the preferred embodiment, when controlling the properties that have influences on the intake air amount (the amount of air (new air) drawn into the combustion chamber 12) such as the center of the operation angle ϕin, ϕex, the maximum lift L, and the throttle opening degree, the electronic control unit 30 cooperatively controls the driving state of the changing mechanisms 15, 21, 22, 23 for changing the properties.

One example of the cooperative control will be described below.

First, the electronic control unit 30 temporarily computes the target values of the center of the operation angle ϕin, ϕex of the intake/exhaust valves 16, 17 and the maximum lift L of the intake valve 16 that are appropriate for the operating state of the engine based on, for example, the computed target value of the intake air amount (the target intake air amount) and the engine rotation speed. Hereinafter, the temporarily computed target values are referred to as "temporary target values".

The target intake air amount is computed with reference to, for example, the depression amount of the gas pedal detected by the gas pedal position sensor 31, and the engine rotation speed is detected by the crank angle sensor 32.

In the preferred embodiment, the electronic control unit 30 adopts the temporary target values of the center of the operation angle ϕin, ϕex for the variable valve timing mechanisms 21, 23 as the final target values (the control target values of the variable valve timing mechanisms 21, 23). Meanwhile, the intake variable valve lift mechanism 22 does not adopt the temporary target value of the maximum lift L as the final target value (the control target value of the intake variable valve lift mechanism 22), but the driving state of the intake variable valve timing mechanism 21, that is, the actual value of the center of the operation angle ϕin in this embodiment is reflected in determining the control target value.

More specifically, when determining the control target value of the intake variable valve lift mechanism 22, the electronic control unit 30 corrects the temporary target value of the maximum lift L by a predetermined correction amount corresponding to the actual value of the center of the operation angle ϕin. The value obtained after the correction is adopted as the control target value of the intake variable valve lift mechanism 22. As described above, the driving state of the intake variable valve timing mechanism 21 is reflected in determining the control target value of the intake variable valve lift mechanism 22 in this embodiment.

The electronic control unit 30 feedback controls the changing mechanisms 21, 22, 23 such that the actual values of the centers of the operation angles ϕin, ϕex of the intake/exhaust valves 16, 17 and the maximum lift L of the intake valve 16 detected by the valve timing sensors and the maximum lift sensor match with the above determined control target values. In this manner, optimal valve actuations of the intake/exhaust valves 16, 17 are obtained in accordance with the operating state of the engine.

With the intake air amount control apparatus that executes the cooperative control, there has been a risk that the following disadvantages could occur. That is, when the operational response of the intake variable valve timing mechanism 21 of the intake valve 16 is reduced for some reason, the intake variable valve lift mechanism 22 may be driven assuming that the operational response has not been reduced, or the intake variable valve lift mechanism 22 may be driven in accordance with the reduction of the operational response, which may cause the maximum lift L of the intake valve 16 to be undesirably set to too small a value or too large a value. In particular, in a case where the maximum lift L of the intake valve 16 is set to too small a value, even if the throttle opening degree is maximized, deficiency of the intake air amount is not eliminated and the engine output is significantly decreased causing a stall, which hinders stable engine operation.

In the preferred embodiment, to avoid such problems as much as possible, the electronic control unit 30 controls the intake variable valve lift mechanism 22 differently when the operational response is determined to be reduced from when the operational response is not determined to be reduced.

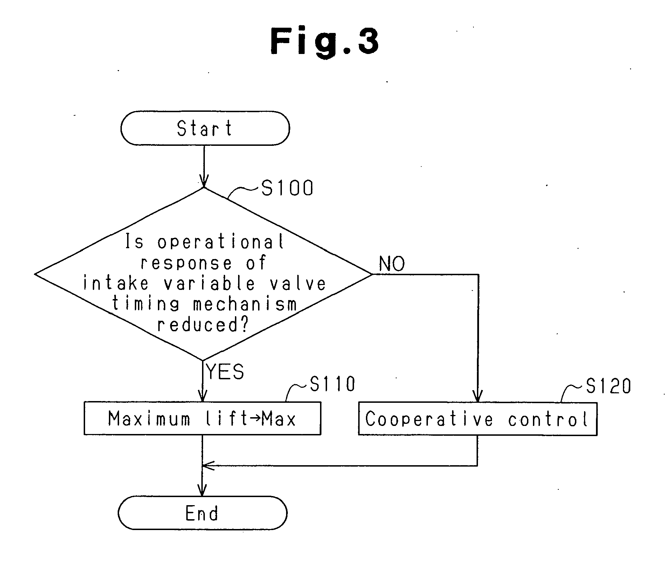

The control procedure executed by the electronic control unit 30 will be described with reference to the flowchart of Fig. 3. The control routine shown in the flowchart is executed as an interrupt by the electronic control unit 30, for example, at predetermined time intervals.

In this control routine, the electronic control unit 30 first determines whether the operational response of the intake variable valve timing mechanism 21 of the intake valve 16 is reduced (step S100). In this process, for example, when there is divergence that is greater than or equal to a predetermined value between the computed control target value of the intake variable valve timing mechanism 21 and the actual value of the center of the operation angle ϕin of the mechanism 21, and the divergence continues to exist for a predetermined time period, the operational response is determined to be reduced.

When the determination result is negative, that is, when it is determined that the operational response is not reduced, the cooperative control is continued (step S120). Meanwhile, when the determination result is positive, that is, when it is determined that the operational response is reduced, the cooperative control is prohibited and the control target value of the intake variable valve lift mechanism 22 is fixed to the maximum value (MAX) within the changeable range of the maximum lift L (step S110). That is, when it is determined that the operational response of the intake variable valve timing mechanism 21 is reduced, the driving state of the intake variable valve lift mechanism 22 is independently controlled. In other words, the cooperative control is restricted.

The intake variable valve lift mechanism 22 is then driven to match the actual value of the maximum lift L with the control target value fixed to the maximum value.

As described above, fixing the control target value of the intake variable valve lift mechanism 22 to the maximum value prevents the intake variable valve lift mechanism 22 from setting the maximum lift L of the intake valve 16 to too small a value in a suitable manner. Therefore, the deficiency of the intake air amount caused by setting the maximum lift L to too small a value, and decrease of the engine output and occurrence of a stall caused by the deficiency of the intake air amount are prevented in a suitable manner.

In the preferred embodiment, the electronic control unit 30 configures determining unit for determining whether the operational response of the intake variable valve timing mechanism 21 of the intake valve 16 is reduced, and restricting unit for restricting the cooperative control when the determining unit determines that the operational response of the changing mechanism 21 is reduced.

The preferred embodiment has the following advantages.
(1) In the preferred embodiment, when the operational response of the intake variable valve timing mechanism 21 is determined to be reduced, the cooperative control is restricted, that is, when reflecting the driving state of the changing mechanism 21 to the driving state of the intake variable valve lift mechanism 22, the degree of reflection is limited. In other words, the driving state of the intake variable valve lift mechanism 22 is more independently controlled. Therefore, even in a circumstance where the intake air amount necessary for maintaining the engine operation may not be secured due to the reduction of the operational response of the intake variable valve timing mechanism 21, the deficiency of the intake air amount caused because of the intake variable valve lift mechanism 22 setting the maximum lift L of the intake valve 16 to too to small a value is suppressed. This further suppresses decrease of the engine output and occurrence of a stall caused due to the deficiency of the intake air amount.
(2) For example, when the operational response of the intake variable valve timing mechanism 21 is reduced, the valve overlap amount (the length of period during which the intake/exhaust valves 16, 17 are both open) becomes excessive causing an internal EGR amount to become excessive. As a result, the intake air amount necessary for maintaining the engine operation may not be secured. In this respect, since the cooperative control is restricted in accordance with the operational response of the intake variable valve timing mechanism 21 in the preferred embodiment, in this case also, the intake variable valve lift mechanism 22 is prevented from setting the maximum lift L of the intake valve 16 to too small a value. Therefore, deficiency of the intake air amount, and decrease of the engine output and occurrence of a stall caused by the deficiency of the intake air amount are suppressed.
(3) The restriction of the cooperative control is executed by prohibiting the cooperative control and independently controlling the driving state of the intake variable valve lift mechanism 22. That is, at this time, the degree of reflection of the driving state of the intake variable valve timing mechanism 21 on the intake variable valve lift mechanism 22 becomes "0". Therefore, the deficiency of the intake air amount caused when the intake variable valve lift mechanism 22 sets the maximum lift L of the intake valve 16 to too small a value is suppressed in a suitable manner.
(4) In the preferred embodiment, when independently controlling the driving state of the intake variable valve lift mechanism 22 as described above, the control target value of the maximum lift L is fixed. Therefore, even if the operational response of the intake variable valve lift mechanism 22 is reduced and cannot be appropriately controlled in accordance with the operating state of the engine, a predetermined amount of the intake air is secured, and resulting disadvantages are suppressed from occurring as much as possible.
(5) In the preferred embodiment, when fixing the control target value of the maximum lift L as described above, the control target value is fixed to a value greater than the minimum value of the changeable range of the maximum lift L. Therefore, the intake air amount necessary for the engine operation is more reliably secured.
(6) In the preferred embodiment, when fixing the control target value of the maximum lift L as described above, the control target value is fixed to the maximum value of the changeable range. Therefore, the intake air amount necessary for the engine operation is more reliably secured, and stable engine operation is performed.

The present invention is not restricted to the illustrated embodiment but may be embodied in the following modifications.

For example, the intake variable valve lift mechanism 22 may be configured such that when the intake variable valve lift mechanism 22 is deactivated, the maximum lift L of the intake valve 16 is restored to the maximum value (MAX) of the changeable range. Alternatively, the maximum lift L may be designed to be restored to the minimum value of the changeable range. In a case where the maximum lift L is designed to be restored to the maximum value (MAX), the control target value is substantially fixed to the maximum value (MAX) of the changeable range of the maximum lift L by deactivating the intake variable valve lift mechanism 22.

In the preferred embodiment, when it is determined that the operational response of the intake variable valve timing mechanism 21 is reduced, the control target value of the intake variable valve lift mechanism 22 is fixed to the maximum value (MAX) of the changeable range of the maximum lift L. However, the control target value may be less than the maximum value as long as it is greater than the minimum value of the changeable range.

In the preferred embodiment, when it is determined that the operational response of the intake variable valve timing mechanism 21 is reduced, the control target value of the intake variable valve lift mechanism 22 is fixed. However, the control target value need not be fixed.

In the preferred embodiment, when it is determined that the operational response of the intake variable valve timing mechanism 21 is reduced, the cooperative control is prohibited and the driving state of the intake variable valve lift mechanism 22 is independently controlled. However, the driving state of the intake variable valve lift mechanism 22 need not be controlled independently. That is, the cooperative control may be restricted by limiting the degree of reflection of the driving state of the intake variable valve timing mechanism 21 on the driving state of the intake variable valve lift mechanism 22 when the determination is made. The manner of restricting the degree of reflection includes, besides independently controlling the driving state of the intake variable valve lift mechanism 22 (the degree of reflection is "0") as described above, for example, suppressing increase of the degree of reflection, prohibiting increase of the degree of reflection, or reducing the degree of reflection within the range where the degree of reflection does not become "0". In this manner, for example, as compared to a case where the cooperative control is executed without limiting the degree of reflection, the driving state of the intake variable valve lift mechanism 22 is more independently controlled. This suppresses deficiency of the intake air amount caused by the intake variable valve lift mechanism 22 setting the maximum lift L of the intake valve 16 to too small a value.

In the preferred embodiment, the determination of whether the operational response of the intake variable valve timing mechanism 21 of the intake valve 16 is reduced is made based on whether the divergence that is greater than or equal to the predetermined value is caused between the control target value of the mechanism 21 and the actual value of the center of the operation angle ϕin, and the divergence has continued for the predetermined time period. With the intake variable valve timing mechanism 21, which is driven using the pressure of the hydraulic oil, the operational response changes due to the viscosity of the hydraulic oil. Therefore, the predetermined value and the predetermined time period, which are the criteria for the determination, may be changed in accordance with the viscosity of the hydraulic oil. In this case, since the viscosity of the hydraulic oil is estimated based on the engine coolant temperature, for example, the predetermined value may be set to a greater value or the predetermined time period may be set to a longer period as the engine coolant temperature is decreased. In this manner, the cooperative control is prevented from being excessively restricted when the engine coolant temperature is low.

In the preferred embodiment, the operational response is determined to be reduced when the divergence that is greater than or equal to the predetermined value is caused between the control target value set based on the operating state of the engine and the actual value, and the divergence continues for the predetermined time period. Instead, the operational response may be determined to be reduced based only on whether the divergence that is greater than or equal to the predetermined value is caused.

In the preferred embodiment, the variable valve timing mechanisms 21, 23 are hydraulic type. However, for example, electric type variable valve timing mechanisms such as those utilizing electric motors or electromagnets may be employed.

In the preferred embodiment, the intake variable valve lift mechanism 22 is driven using an electric motor. However, the intake variable valve lift mechanism 22 may be, for example, an electric type that uses a power source other than the electric motor such as electromagnets, or the intake variable valve lift mechanism 22 may be a hydraulic type.

Not only the changing mechanisms 21, 22, 23, but also, for example, the throttle opening degree changing mechanism 15 may be employed as the changing mechanism, which serves as at least either the source of reflection of the driving state or the one to which the driving state is reflected in the cooperative control. Moreover, as long as the changing mechanism has an influence on the adjustment of the intake air amount, any changing mechanism other than the changing mechanisms 15, 21, 22, 23 may be employed. That is, the driving state of the intake variable valve lift mechanism 22 may be cooperatively controlled based on the driving state of at least one of all the changing mechanisms including the changing mechanisms 15, 21, 22, 23 and other changing mechanisms except the intake variable valve lift mechanism 22. Furthermore, at least one of all the changing mechanisms except the intake variable valve lift mechanism 22 may be cooperatively controlled based on the driving state of the intake variable valve lift mechanism 22. Reduction of the operational response may be determined on at least one of all the changing mechanisms and the cooperative control may be restricted based on the determination result. Such a modified embodiment includes determining decrease of the operational response of the intake variable valve lift mechanism 22, and restricting the cooperative control based on the determination result. When any of the above modified embodiments is employed, since the cooperative control is restricted when reduction of the operational response of at least one of all the changing mechanisms is determined, the driving state of the intake variable valve lift mechanism 22 is more independently controlled.. Therefore, the intake variable valve lift mechanism 22 is suppressed from setting the maximum lift L of the intake valve 16 to too small a value. The above mentioned modification includes the exhaust variable valve timing mechanism 23 of the exhaust valve 17 as the changing mechanism that has an influence on the adjustment of the intake air amount. This is because the "valve overlap amount" that correlates with the internal EGR amount that has an influence on the intake air amount is changed when the exhaust variable valve timing mechanism 23 changes the center of the operation angle ϕex, that is, the valve timing of the exhaust valve 17.

The cooperative control is not necessarily executed based on the actual value of the driving state of the changing mechanism, but may be executed based on the control target value.

Therefore, the present examples and embodiments are to be considered as illustrative and not restrictive and the invention is not to be limited to the details given herein, but may be modified within the scope and equivalence of the appended claims.

## Claims

1. An intake air amount control apparatus (30) for an internal combustion engine (10) equipped with an intake valve (16), the apparatus (30) comprising:
a plurality of changing mechanisms (21, 22, 23) that change the manner in which intake air is supplied to the internal combustion engine (10), wherein the changing mechanisms (21, 22, 23) include a variable valve lift mechanism (22), which changes the maximum lift (L) of the intake valve (16);
a control unit (30), wherein the control unit (30) executes a cooperative control in which, based on the driving state of one of the variable vale lift mechanism (22) and at least one of the other changing mechanisms (21, 23), the driving state of the other one of the variable valve lift mechanism (22) and the at least one of the changing mechanisms (21, 22, 23) is controlled, the control apparatus (30) being
**characterized by**:
a determining unit (30), which determines whether the operational response of the changing mechanisms (21, 22, 23) is decreased; and
a restricting unit (30), which restricts the cooperative control when the determining unit (30) determines that the operational response of at least one of the changing mechanisms (21, 22, 23) is decreased.

2. The control apparatus (30) according to claim 1, **characterized in that** the changing mechanisms (21, 23) other than the variable valve lift mechanism (22) include a variable valve timing mechanism (21), which changes the valve timing of the intake valve (16).

3. The control apparatus (30) according to claim 1 or 2,
**characterized in that** the driving state of the variable valve lift mechanism (22) is controlled independently from the other changing mechanisms (21, 23) to restrict the cooperative control.

4. The control apparatus (30) according to claim 3,
**characterized in that** the restricting unit (30) fixes a control target value of the maximum lift (L) when controlling the driving state of the variable valve lift mechanism (22) independently from the other changing mechanisms (21, 23).

5. The control apparatus (30) according to claim 4,
**characterized in that** the restricting unit (30) fixes the control target value to a value greater than the minimum value of the changeable range of the maximum lift (L).

6. The control apparatus (30) according to claim 5,
**characterized in that** the restricting unit (30) fixes the control target value to the maximum value of the changeable range of the maximum lift (L).

7. The control apparatus (30) according to claim 6, **characterized in that** the maximum lift (L) is fixed to the maximum value of the changeable range when the variable vale lift mechanism (22) is deactivated.

8. An intake air amount control method for an internal combustion engine (10) equipped with an intake valve (16), the method comprising:
changing the manner in which intake air is supplied to the internal combustion engine (10) using a plurality of changing mechanisms (21, 22, 23), wherein the changing mechanisms (21, 22, 23) include a variable valve lift mechanism (22), which changes the maximum lift (L) of the intake valve (16);
executing a cooperative control in which, based on the driving state of one of the variable vale lift mechanism (22) and at least one of the other changing mechanisms (21, 23), the driving state of the other one of the variable valve lift mechanism (22) and the at least one of the changing mechanisms (21, 23) is controlled, the control method being **characterized by**:
determining whether the operational response of the changing mechanisms (21, 22, 23) is decreased; and
restricting the cooperative control when it is determined that the operational response of at least one of the changing mechanisms (21, 22, 23) is decreased.

9. The control method according to claim 8,
**characterized by**:
controlling the driving state of the variable valve lift mechanism (22) independently from the other changing mechanisms (21, 23) to restrict the cooperative control.

10. The control method according to claim 9,
**characterized by**:
fixing a control target value of the maximum lift (L) when controlling the driving state of the variable valve lift mechanism (22) independently from the other changing mechanisms (21, 23).
